# EUROPEAN PATENT APPLICATION

(11) **EP 1 621 075 A1**
(43) Date of publication of application: **01.02.2006**
(21) Application number: 03719147.5
(22) Date of filing: 21.04.2003
(51) Int. Cl.: A01N 1/00

(54) **REMAINS FLUID LEAKAGE PREVENTION DEVICE**

(71) Applicant: Nishihara, Risa, Hiroshima-shi, Hiroshima 733-0813 (JP)
(72) Inventor: Nishihara, Risa, Hiroshima-shi, Hiroshima 733-0813 (JP)
(74) Representative: Herrmann, Uwe
(86) International application number: PCT/JP2003/005028
(87) International publication number: WO 2004/093540

(57) **Abstract**

According to this invention, body fluid sealing members for respectively effectively preventing leakage of body fluids from principal portions of a corpse are prepared as a set, and most of body fluid leakage from a corpse is prevented as a whole by using the set. The corpse body fluid leakage preventing device of the invention includes a syringe (1) filled with a jelly substance (11) including a highly water-absorbing polymer to be inserted into a throat (B) of a corpse, an inserting tube (20) to be inserted into the throat (B) from a nasal cavity (A), a covering member (30) externally fit on the inserting tube (20), a rectum body fluid sealing member (40), and a cotton substance (60) for a mouth.

## Description

### Technical Field

The present invention relates to a corpse body fluid leakage preventing device to be plugged into a body cavity of a corpse for preventing leakage of a body fluid from the corpse. More particularly, the invention provides a corpse body fluid leakage preventing device equipped with a set of body fluid leakage preventers respectively suitably used for effectively preventing leakage of body fluids from a throat, a rectum and a mouth of a corpse.

### Background Art

After death, body fluids such as a gastric juice, a lung fluid and dejection may be leaked from a human body. Therefore, for example, in a hospital, after confirming a death, absorbent gauze, absorbent cotton or the like is plugged into body cavities of the corpse such as the mouth, the nasal cavities, the auditory pits, the anal and the female vagina, so as to prevent the leakage of the body fluids. Also, a similar treatment is applied to an opening of a corpse formed in an accident or by an operation.

It is known that a highly water-absorbing polymer powder is plugged into a mouth, nasal cavities, auditory pits and a throat instead of the gauze or cotton. As disclosed in Japanese Laid-Open Patent Publication No. 08-133901, for plugging a highly water-absorbing polymer into a mouth, nasal cavities and auditory pits, use of not a powder but a jelly of the polymer is known.

As disclosed in Japanese Laid-Open Patent Publication No. 2002-275001, a body fluid leakage preventing device in which a jelly substance including a highly water-absorbing polymer powder is used for a throat or a rectum is known.

Many of body fluid leakage preventing devices are described to be applicable to all of a throat, a rectum (an anal), a female vagina, auditory pits, nasal cavities and a mouth, and most of rectum body fluid leakage preventing devices are described to use, for a rectum, a body fluid leakage preventing member for a throat, auditory pits or nasal cavities.

As a rectum body fluid leakage preventing device, a device in which a balloon inserted into an anal is pumped up with a gas or air for plugging the anal is known as described in Japanese Laid-Open Patent Publication No. 2001-161733.

In the general method in which absorbent gauze, absorbent cotton or the like is plugged into the body cavities such as the mouth, the nasal cavities and the auditory pits of a corpse, in the case where the amount of body fluids is large, the absorbent gauze or the absorbent cotton insufficiently works and the body fluids leak out of the corpse. The treatment of the leaked body fluids is disfavored because there is a fear of infection with an infectious agent in treating the leaked body fluids. Also, it is necessary to exchange used absorbent gauze or absorbent cotton with fresh absorbent gauze or cotton, and the exchange is not only troublesome but also there is a danger of infection with an infectious agent through the body fluids of the corpse, and furthermore, offensive odor of the leaked body fluids disadvantageously remains around the corpse in exchanging the gauze or cotton.

Alternatively, in the method in which a highly water-absorbing polymer fine powder is plugged into the body cavity of a corpse with a syringe instead of the absorbent gauze, it is difficult to plug the powder because even when the powder is pressed, merely the density of the powder is increased and the powder does not smoothly flow within the syringe. Also, scattered powder particles are diffused and hence it is difficult to make the powder stay in a portion desired to be plugged with by setting the powder. In some cases, the powder may come out of the corpse and soil a place around the corpse. Furthermore, in the case where the power is directly plugged into a body cavity of a corpse, if the amount of body fluid is small, the fine powder may run out of the corpse or a gel may be melt to leak out of the corpse.

Therefore, there is a known device using a jelly instead of a powder. For example, according to the description of Japanese Laid-Open Patent Publication No. 08-133901, a jelly A, which is obtained by dissolving a powder polymer including a deodorant in an appropriate amount of water, is filled with a pressure by using a syringe or the like in the innermost portions of the nasal cavities, the mouth cavity and the auditory pits of a corpse for hemostasis, and a plug B of sanitary cotton is further provided outside the jelly A.

According to the description of this publication, offensive odor is prevented by mixing a deodorant in the jelly, and a body cavity is plugged with the jelly itself. In addition, since the cavity cannot be sufficiently sealed with the jelly alone, it is further sealed with sanitary cotton or the like. When a powder polymer is dissolved in water to obtain a jelly as in this publication, the flowability is improved, and therefore, it can be easily injected into the innermost portions of the nasal cavities or the like, and even when it is injected by using a syringe, it can be smoothly injected through the syringe tube without scattering differently from the powder. However, since the powder is already dissolved in water, the water-absorbing property originally peculiar to the polymer has been almost lost. Accordingly, the jelly is used merely as a plug for plugging the nasal cavity and the leakage of a body fluid cannot be sufficiently prevented.

Japanese Laid-Open Patent Publication No. 2002-275001 discloses a body fluid leakage preventing member having a high water-absorbing property although it is made of a jelly. In particular, a body cavity is plugged by using a body fluid leakage preventing member in the form of a jelly in which a polymer is dispersed in the form of a powder, and this is very good as a body fluid leakage preventing member to be used for a throat. When a portion like a throat is filled with this jelly substance, the jelly substance stays in the portion and absorbs a body fluid so as to seal the throat. However, when this jelly is plugged into a rectum, it cannot stay in the outlet of the rectum (the outlet of the anal) but enters the inner portion and hence cannot function as a sealing member for the rectum. As a sealing member for a rectum, it is insufficient to merely fill a fine powder or a jelly substance of a highly water-absorbing polymer by using a syringe, and another means is necessary.

For use for a rectum, in a technique disclosed in Japanese Laid-Open Patent Publication No. 2001-161733, in which a balloon inserted into an anal is pumped up with a gas or air for sealing, it is necessary to use a device for pumping up the balloon with air and to prevent the air from leaking. Therefore, a body fluid leakage preventing member according to this technique cannot be easily dealt with and its function to prevent the leakage of body fluids is not sufficient. In particular, since it does not swell through absorbance of a body fluid, the body fluid may leak even through a small gap.

Accordingly, various examinations have been made for realizing a body fluid leakage preventing device to be used for a rectum in which a highly water-absorbing polymer is used for absorbing a body fluid and plugging into the rectum by swelling, but a satisfactory device has not been realized.

Accordingly, the present inventors have studied and developed a body fluid leakage preventing device suitably used for a rectum differently from a body fluid leakage preventing device for a throat. However, this body fluid leakage preventing device for a rectum is insufficient as a whole body fluid leakage preventing device for a corpse because the leakage of body fluids from various portions of a corpse cannot be prevented by merely providing the body fluid leakage preventing device for a rectum.

### Disclosure of the Invention

Therefore, an object of the present invention is, with body fluid leakage preventing members for effectively preventing leakage of body fluids from various portions of a corpse prepared as a set, providing a device using this set for preventing whole leakage of body fluids from a corpse and capable of definitely realizing a treatment for preventing leakage of body fluids from a corpse.

In particular, a throat body fluid leakage preventing device is used for a throat, a rectum body fluid leakage preventing device is used for a rectum and a packing for a mouth is additionally prepared, so that they can be prepared as a set. Thus, body fluid leakage from most of portions of a corpse can be prevented by using this set.

An object of the invention is providing a technique to safely, definitely and simply executing a corpse treatment by effectively preventing leakage of body fluids from a copse with a throat body fluid leakage preventing member including a jelly substance prepared, with a rectum body fluid leakage preventing member of a different type from the throat body fluid leakage preventing member prepared and with a packing for a mouth prepared.

In order to achieve the object, the corpse body fluid leakage preventing device of this invention includes a syringe filled with a jelly substance including a highly water-absorbing polymer to be inserted into a throat of a corpse; an inserting tube including a flexible inserting tube body made of a synthetic resin to be inserted into the throat from a nostril, a connecting portion provided at a rear end of the inserting tube body and capable of connecting to the syringe, and an opening provided at a tip of the inserting tube body; a covering member externally fit on the inserting tube; a body fluid sealing member for a rectum including a cylindrical molded body made from highly water-absorbing porous fiber and a water-soluble sheet covering an outer face of the cylindrical molded body; and a cotton substance for a mouth to which a jelly substance including a highly water-absorbing polymer is applied.

According to this structure, the jelly substance filled in the syringe can be smoothly plugged into the throat through the inserting tube with the inserting tube inserted from a nostril, and the jelly substance absorbs moisture and swells in the throat, so that body fluids can be definitely prevented from leaking through a mouth and the nasal cavity.

Also, with respect to a rectum, a lubricant such as glycerin is applied to the outer face of the rectum body fluid sealing member to be plugged, and hence, it can be inserted as if it were a suppository, and thus, the plugging treatment is eased. In particular, when a lubricant is applied, since the water-soluble sealing material is provided on the cylindrical molded body, the lubricant can be prevented from permeating into the cylindrical molded body, and hence it can be smoothly plugged. When the rectum body fluid sealing member is plugged, the water-soluble seal is immediately dissolved, and the cylindrical molded boy is rapidly swelled by the body fluid. Therefore, the outlet of an anal can be rapidly sealed, and the leakage of the body fluid can be definitely prevented.

Furthermore, the leakage of a fluid such as saliva can be definitely prevented by plugging the mouth with the cotton substance. In addition, when the cotton substance is positioned in both cheeks, the cotton substance swelled by absorbing the fluid exhibits a good function to effectively adjust the shape of both cheeks. In particular, in a corpse of an old person, when dentures are taken out, the cheeks are collapsed to be poor-looking. However, when the cotton substance is positioned within the cheeks, the cotton substance attains appropriate puff and hence the cheeks can be kept in an appropriate shape.

In this manner, in principal portions of a corpse where body fluids leak, that is, in the throat, the rectum and the mouth, the body fluids are absorbs and the body fluid leakage is prevented. Therefore, when merely one set of the body fluid leakage preventing device is prepared, a body fluid leakage preventing treatment for the principal portions of a corpse can be realized. In particular, the syringe for use for a throat and the sealing member for use for a rectum are easily inserted and good at handling properties.

Preferably, the body fluid sealing member for a rectum is included in a ratio of 40 through 180 parts by volume on the basis of 100 parts by volume of the jelly substance filled in the syringe.

Specifically, the jelly substance of the invention is used in various tests for the amount of jelly substance to be used for preventing body fluid leakage from a throat of a corpse with respect to various types of body build and a difference between males and females. As a result, it has been found that when the amount of jelly substance for a throat is set in accordance with the size of a corpse, the size of the rectum sealing member falls in a given range in accordance with the amount of the jelly substance. Specifically, the amount of jelly substance for use in a throat is set to an amount for a general person, and the size of the rectum sealing member is set to a given range accordingly. In this manner, the body fluid leakage preventing device can be commonly used for any of general corpses, and there is no need to prepare a plurality of throat syringes and rectum sealing members in various sizes. Therefore, the cost can be reduced and a fear of misuse of a different type of body fluid sealing device can be avoided.

In the case where the body fluid sealing member for a rectum is included in a ratio of 40 through 180 parts by volume on the basis of 100 parts by volume of the jelly substance filled in the syringe, an amount of the jelly substance filled in the syringe is preferably 20 through 30 cc, and an amount of the rectum body fluid sealing member is preferably 0.7 through 1.3 times as large as the amount of the jelly substance.

Specifically, the jelly substance of the invention is used in various tests for the amount of jelly substance to be used for preventing body fluid leakage from a throat of a corpse with respect to various types of body build and a difference between males and females. As a result, it has been found that the amount can be intensively set with respect to general persons, and that the size of the rectum body fluid sealing member of the invention is set to fall in a given range with respect to the volume of the jelly substance for a throat. When the amount of the jelly substance for a throat and the size of the rectum body fluid sealing member with respect to the amount of jelly substance are set within a given range, the body fluid leakage preventing device commonly used for any of general corpses can be provided, and there is no need to prepare a plurality of throat syringes and rectum sealing members in various sizes. Therefore, the cost can be reduced, and a fear of misuse of a different type of body fluid leakage preventing device can be avoided.

Preferably, the jelly substance filled in the syringe includes a solvent, a puffing agent and a highly water-absorbing polymer powder, the highly water-absorbing polymer powder is dispersed in a ratio of 5000 or more particles per 1 mL of the jelly substance, the puffing agent is included in a ratio of 0.02 through 0.15 parts by weight on the basis of 100 parts by weight of the solvent, and the jelly substance has viscosity of 8000 through 40000 cP.

In this case, since a large number of particles of the highly water-absorbing powder are dispersed in the jelly substance used as the body fluid sealing member to be plugged in the throat of a corpse, the flowability of the body fluid sealing member is high and hence it easily flows through a narrow gap in a nasal cavity, and it does not scatter even when plugged with a pressure by using a syringe. In addition, after plugging into the throat, the jelly substance has appropriate viscosity and hence does not pass through the throat to flow into the innermost portion of the esophagus but stays in the throat. The polymer dispersed in the jelly substance staying in the throat absorbs the body fluid and prevents it from leaking outside.

The jelly substance preferably further includes a neutralizer and a lubricant. Thus, the viscosity of the jelly substance can be appropriately adjusted, so as to attain viscosity sufficient for staying in and sealing the throat without flowing beyond the throat when plugged while keeping the flowability necessary in plugging.

Preferably, a nozzle of the syringe is covered with a removable cap, and the connecting portion of the inserting tube body has a tubular portion to be fit in the nozzle from which the cap has been removed, and a step portion abutted a tip of the nozzle. Thus, the inserting tube and the syringe can be easily connected to each other and they can be connected without allowing the jelly substance to leak, and thus, workability in plugging the jelly substance is good.

Also preferably, a nozzle of the syringe is covered with a breakable cap, and the connecting portion of the inserting tube body has a tubular portion to be fit in the nozzle from which the cap has been removed by breaking and a step portion abutted a tip of the nozzle. Thus, the jelly substance filled in the syringe can be kept by definitely covering with the cap, and the device can be stored without allowing the jelly substance to leak.

Also preferably, a nozzle of the syringe is covered with a cap, and a connecting portion of the inserting tube is provided with a cut portion for cutting the cap, when the nozzle covered with the cap is connected, for allowing the jelly substance filled in the syringe to be introduced through the connecting portion into the inserting tube body.

In this case, the jelly substance filled in the syringe can be kept by definitely covering with the cap, and the device can be stored without allowing the jelly substance to leak. In addition, the cap can be easily broken with the cut portion provided in the connecting portion by setting the discharge tube of the syringe covered with the cap to the connecting portion. Therefore, the syringe and the inserting tube can be easily made to be communicated with each other without leaking the jelly substance.

Preferably, the covering member has such a length that a tip of the covering member is extruded beyond the opening provided at the tip of the inserting tube when the covering member is externally fit on the inserting tube body of the inserting tube. Specifically, since the inserting tube body of the inserting tube needs to bend in accordance with the shape of a nasal cavity when inserted into the nasal cavity, it is flexible (plasticity). Therefore, when it is stored as a set together with the syringe and the other elements for a long period of time, it may be deformed, for example, by being bent. Accordingly, in this invention, the inserting tube body is covered with the covering member for preventing the deformation of the inserting tube body. In addition, since the length of the covering member is set in the aforementioned manner, the tip of the inserting tube body can be definitely protected by the covering member, and therefore, the tip of the inserting tube body can be prevented from being deformed or the opening provided at the tip can be prevented from being collapsed.

Preferably, the covering member has an inner diameter larger than an outer diameter of the inserting tube body and has an engaging portion to be engaged with an outer circumference of the inserting tube. Thus, the covering member can be prevented from carelessly slipping off from the inserting tube body, and in use, the covering member can be easily taken out of the inserting tube body.

Preferably, the engaging portion of the covering member is engaged by being fit on an outer circumference of the connecting portion of the inserting tube. Thus, the covering member can be prevented from carelessly slipping off from the inserting tube body, and in use, the covering member can be easily taken out of the inserting tube body. In particular, the function to prevent the careless slipping off and the function to easily take out can be both realized with a simple structure.

Preferably, the jelly substance filled in the syringe includes at least one of a deodorant and a disinfectant. Thus, offensive odor can be absorbed and an operator can be prevented from being infected with an infectious agent during the operation.

Preferably, the cylindrical molded body of the body fluid sealing member for a rectum includes at least one of a deodorant and a disinfectant. Thus, offensive odor can be absorbed and an operator can be prevented from being infected with an infectious agent during the operation.

Preferably, a scale for checking the amount of jelly substance plugged into the throat is not provided on the outer circumference of the syringe. Specifically, a commercially available syringe is provided with scales of, for example, every 0.1 cc, so as to check the amount having been plugged. If the commercially available syringe is filled with the jelly substance to be used for a throat, the cost can be reduced. However, in using the syringe for plugging the jelly substance into the throat of a corpse, since the syringe has the scales, the scales may be used for estimation, and for example, it is apprehended that the plugged amount is arbitrarily determined based on the size of the corpse to stop plugging before injecting a sufficient amount or that the injection is stopped when the plugging resistance is increased after plugging a given amount. In particular, an experienced nurse may more possible make such estimation. Accordingly, scales as those of a commercially available syringe are preferably not provided.

Preferably, a trifle mark to be used for injecting a small amount of jelly substance is provided on an outer circumference of the syringe. Thus, when a mark is provided merely for an infant or the like that needs a special amount of jelly substance, the amount to be plugged can be conveniently set by using the mark.

Preferably, the syringe is contained in a sealed bag. Thus, even during storage of a long period of time, the jelly substance filled in the syringe can be prevented from solidifying through moisture absorption. In particular, even when the cap is arbitrarily broken or a gap is caused between the cap and the nozzle of the syringe by accident or the like, the jelly substance can be prevented from solidifying through moisture absorption.

Preferably, the syringe has a piston for pushing out the jelly substance filled therein, and a colored identification mark for identifying a type of syringe is provided at least one of the syringe and the piston. Thus, the syringe to be used for treating a corpse can be distinguished from another syringe, and misuse can be prevented.

Preferably, in the corpse body fluid leakage preventing device, the corpse body fluid preventing device further includes working gloves. Thus, there is no need to separately prepare gloves for use in plugging the rectum sealing member into a rectum of a corpse. The groves are preferably rubber gloves.

Preferably, in the corpse body fluid leakage preventing device, the corpse body fluid leakage preventing device further includes paper sheets for wiping hands. Thus, the hands of an operator can be simply wiped after the treatment, which increases the safety.

Preferably, a disinfectant is permeated into the paper sheets for wiping hands. Thus, an operator can be prevented from being infected with an infectious agent by simply wiping his/her hands after the treatment.

Preferably, in the corpse body fluid leakage preventing device, the corpse body fluid leakage preventing device further includes a sealing member for use as an earplug or a nose plug. Thus, the leakage of body fluids from ears and a nose can be also prevented.

Preferably, the sealing member is made of a cotton material. Thus, auditory pits and nasal cavities can be easily sealed.

Preferably, the sealing member includes, in the cotton material, 0 through 1.5 mg of jelly substance including a highly water-absorbing polymer. Thus, the function to prevent the leakage of the body fluids from auditory pits and nasal cavities can be improved.

Preferably, the sealing member is contained in a plastic sealed bag. Thus, the sealing member can be prevented from becoming unusable through contamination and moisture absorption.

Preferably, the corpse body fluid leakage preventing device further includes a vessel containing a lubricant. In this case, when the lubricant is applied to portions to be inserted into body cavities of a corpse, such as the surface of the rectum sealing member and the tip of the inserting tube, they can be easily inserted, and the workability is improved. As the lubricant, glycerin is preferred.

Preferably, the corpse body fluid leakage preventing device further includes a body fluid sealing member for a female vagina including a cylindrical molded body of highly water-absorbing porous fiber and a water-soluble sheet covering an outer circumference of the cylindrical molded body. Thus, the device is conveniently used for a female.

When two body fluid sealing members having an identical structure are alternatively used for a rectum and a female vagina, the cost can be advantageously reduced, and a fear of misuse can be avoided.

Preferably, the corpse body fluid leakage preventing device further includes a container bag for containing the syringe, the inserting tube, the covering member and the like after use. Thus, used elements can be contained and treated without being scattered.

In the corpse body fluid leakage preventing device, the cotton substance preferably includes 0.5 g through 2.0 g of jelly substance per volume of 16 cm³. Thus, the body fluid in a mouth can be absorbed and prevented from leaking outside, and the cotton substance can swell into an appropriate size, which is convenient for keeping the puff shape of a cheek.

Preferably, the jelly substance included in the cotton substance is of the same type as the jelly substance filled in the syringe. If another cotton substance for plugging a mouth is necessary, commercially available cut cotton is prepared and a small amount of jelly substance filled in the syringe is applied thereto as an emergency treatment. Thus, a similar cotton substance can be prepared to cope with emergency.

In the corpse body fluid leakage preventing device, the cotton substance is preferably contained in a plastic sealed bag. Thus, the cotton substance can be stably stored for a long period of time without becoming unusable through careless moisture absorption or being contaminated.

In the corpse body fluid leakage preventing device, the cotton substance and the sealing member are preferably together contained in one plastic sealed bag. Thus, the volume is reduced and the whole device becomes compact.

In the corpse body fluid leakage preventing device, a mark for confirming the tip reaching the throat is preferably provided in a middle portion of the inserting tube body. Thus, the mark can be used as a guidepost for inserting the inserting tube, which increases the workability.

In the corpse body fluid leakage preventing device, the highly water-absorbing polymer of the jelly substance filled in the syringe is preferably a fine powder dispersed in a ratio of 17000 through 29000 particles in 1 mL of the jelly substance. Thus, the water-absorbing property can be kept while keeping the flowability of the jelly substance, and therefore, the throat can be further definitely sealed.

Preferably, the highly water-absorbing powder is a powder of 20 through 150 mesh dispersed in a ratio of 18000 through 25000 particles in 1 mL of the jelly substance. Thus, the water-absorbing property can be kept while keeping the flowability of the jelly substance, and therefore, the function to seal a throat can be highly attained.

In the corpse body fluid leakage preventing device, when the jelly substance includes at least one of ethylene glycol, propylene glycol, diethylene glycol, methanol, ethanol and glycerin, a powder can be advantageously held to be dispersed in the jelly substance.

In the corpse body fluid leakage preventing device, the jelly substance filled in the syringe preferably includes 0.01 through 1.0 part by weight of an acrylic acid polymer and 0.03 through 0.7 part by weight of a neutralizer on the basis of 100 parts by weight of an alcohol-based principal component. Thus, the function to hold the powder to be dispersed in the jelly substance while keeping its water-absorbing property can be advantageously increased.

In the corpse body fluid leakage preventing device, the jelly substance filled in the syringe preferably has viscosity of 8000 through 40000 cP. Thus, appropriate flowability for plugging the jelly substance into the throat from the nasal cavity and keeping the jelly substance in the throat can be secured.

In the corpse body fluid leakage preventing device, pH of the jelly substance filled in the syringe is preferably 6 through 8. Thus, the water-absorbing polymer can be held to be dispersed in the jelly substance with the water-absorbing property of the water-absorbing polymer kept, which is advantageous for preventing the leakage of the body fluid from the throat.

In the corpse body fluid leakage preventing device, the body fluid sealing member for a rectum preferably includes a cylindrical molded body made from porous fiber with a two-layered structure including an inner layer corresponding to a core material made of acrylic fiber and a high water-absorbing outer layer, and a water-soluble sheet covering an outer circumference of the cylindrical molded body.

In employing this structure, the water-soluble sheet is rapidly dissolved when brought into contact with a body fluid, and the cylindrical molded body rapidly swells along the diameter direction, and hence, the body fluid can be prevented from leaking out through the rectum. In particular, the fiber physical properties can be kept by the core material of alkaline fiber, and the highly water-absorbing outer layer absorbs the body fluid and swells. Therefore, the cylindrical molded body can swell to be tightly adhered to the paries of the rectum while keeping the inserted position in the rectum, and hence, the function to prevent the leakage of the body fluid is good.

In the corpse body fluid leakage preventing device, the body fluid sealing member for a rectum preferably has a length of 20 through 90 mm and a diameter of 10 through 25 mm, and thus, it can be suitably used for a body cavity positioned in the lower half of the body such as an anal or a female vagina.

In the corpse body fluid leakage preventing device, the water-soluble sheet of the body fluid sealing member for a rectum preferably has a thickness of 200 µm or less and is rapidly dissolved when brought into contact with a body fluid. Thus, before inserting into a rectum, the applied lubricant can be prevented from permeating into the cylindrical molded body, and in the case where it is inserted into the rectum, the highly water-absorbing sheet is rapidly dissolved and hence a body fluid rapidly comes into contact with the cylindrical molded body, and therefore, the cylindrical molded body can rapidly swell.

Preferably, when the cylindrical molded body comes into contact with a body fluid, the cylindrical molded body preferably rapidly absorbs moisture and swells in diameter by approximately 2.5 times or larger. Thus, the cylindrical molded body can be tightly adhered to the paries of the rectum, and the body fluid can be definitely prevented from leaking out of the body cavity.

Since the cylindrical molded body includes at least one of a deodorant and a disinfectant, offensive odor can be absorbed and an operator can be prevented from being infected with an infectious agent during the operation.

In the corpse body fluid leakage preventing device, preferably, a first opening is formed on a tip face of the inserting tube body and a second opening is formed on a side face in the vicinity of the tip face of the inserting tube body. Thus, the jelly substance contained in the inserting tube body is discharged from different positions at different angles, and therefore, it can be easily introduced from the inserting tube body into the nasal cavity.

Preferably, the rectum body fluid sealing member is included in a ratio of 40 through 180 parts by volume on the basis of 100 parts by volume of the jelly substance filled in the syringe. In particular, it is preferred that the amount of jelly substance filled in the syringe is 20 through 30 cc and that the amount of rectum body fluid sealing material is 0.7 through 1.3 times as large as this value.

When the amount of jelly substance for a throat and the size of the rectum body fluid sealing member are set in given ranges, the body fluid leakage preventing device commonly used for any of general corpses can be provided, and there is no need to prepare a plurality of throat syringes and rectum sealing devices in various sizes.

The water-absorbing polymer included in the jelly substance filled in the syringe of this invention is dispersed in the form of a powder in the jelly substance, and in order to definitely prevent the leakage by absorbing a body fluid, the powder is preferably dispersed in the jelly substance in a ratio of 5000 or more particles/mL. In particular, more preferably, the water-absorbing polymer is made of a fine powder dispersed in the jelly in a ratio of 15000 particles/mL through 30000 particles/mL. Moreover, when the water-absorbing powder is a powder of 20 through 150 mesh dispersed in the jelly in a ratio of 18000 particles/mL through 25000 particles/mL, the body fluid leakage preventing effect is very high.

As a mucilage medium for the jelly substance, at least one selected from the group consisting of ethylene glycol, propylene glycol, diethylene glycol, methanol, ethanol and glycerin is preferably used. Particularly, a glycol-based medium is preferred because a state where a powder of an acrylic acid polymer is dispersedly held is stable. Ethylene glycol is easily handled, and even when it is allowed to stand for a half year or more, the fine particle dispersed in the jelly substance does not dissolve and can stably keep the powder state for a long period of time.

The jelly substance preferably includes 0.01 through 1.0 part by weight of an acrylic acid polymer and 0.03 through 0.7 part by weight of a neutralizer on the basis of 100 parts by weight of an alcohol-based principal component used as the mucilage medium. In particular, acrylic acid is necessary for producing a stable jelly, and when the content is smaller than 0.01 part by weight, the viscosity is insufficient. On the other hand, when the content exceeds 1.0 part by weight, the viscosity reaches a saturated point, and the viscosity cannot be increased by further increasing the content.

The neutralizer is necessary for keeping the pH of the jelly substance at an appropriate value, and when the content is smaller than 0.03 part by weight, the pH is lowered, and hence the viscosity of the jelly substance becomes insufficient and the effective range of viscosity cannot be attained. On the other hand, when the content exceeds 0.7 part by weight, the viscosity of the jelly becomes unstable and is difficult to adjust.

The viscosity of the jelly substance is preferably 8000 through 40000 cP. When the viscosity is lower than this value, the viscosity is so low that the jelly substance is dry, and hence, it can be easily introduced into a throat but cannot stay in a desired position, and therefore, the sealing effect cannot be attained. On the other hand, when the viscosity is higher than 40000 cP, the viscosity is too high to easily inject into a throat.

The pH of the jelly substance is preferably adjusted to 6 through 8. When the pH is lower than 6, the viscosity of the jelly is insufficient and the effective range of the viscosity cannot be attained. On the other hand, when the pH is higher than 8, the viscosity is varied and unstable, and its stability in long storage is lowered as well as it is difficult to inject into a body cavity. The pH is used as a barometer for setting the viscosity of the jelly to an appropriate value.

The body fluid sealing member may include a chemical such as chlorine dioxide, a deodorant, a disinfectant or an antiseptic.

An example of a method for preparing the jelly substance of this invention will be described.

Ethylene glycol, that is, a mucilage medium, is placed in a stirring machine. While stirring the ethylene glycol, an acrylic acid polymer is added in a stepwise manner. After stirring 2 through 8 hours, a dispersion is obtained. While stirring the dispersion, a neutralizer is added in a dropwise manner. Thus, the jelly is obtained.

A water-absorbing polymer in the form of a gel powder is added to the jelly, and the resultant is sufficiently stirred. Thus, the jelly in which the polymer is dispersed is obtained.

As the water-absorbing fiber for use for a rectum, one having an outer layer of a hydrophilic crosslinked polymer and an inner layer of an acrylic polymer and/or another polymer is preferred, and the water-absorbing fiber preferably has water growth of 5 through 200 cc/g. In particular, when such a water-absorbing fiber includes a carboxyl group, it attains adsorption against ammonia and hence absorbs offensive odor or the like. The content of the carboxyl group is preferably 0.5 through 4.0 mmol/g.

In particular, as the fiber cylindrical molded body, water-absorbent fiber (brand name: Lanseal F; manufactured by Toyobo Co., Ltd.) having a double-layer structure composed of an inner layer corresponding to a core of acrylic fiber and an outer layer surrounding the inner layer, having a highly water-absorbing property and processed to swell after absorbing water is suitably used.

Any water-soluble sheet can be used as far as it can wrap the cylindrical molded body, can be coated with the lubricant, can prevent the lubricant from permeating into the cylindrical molded body and is rapidly dissolved in a body fluid when it comes into contact with the body fluid so as to allow the cylindrical molded body to come into contact with the body fluid. For example, water-soluble sheets of product numbers 30MDP, 60MDP and 120MDP manufactured by Mitsubishi Paper Mills Limited can be used.

The lubricant is applied on the surface of the molded body so that the sealing member can be smoothly inserted into an anal of a human body, and glycerin or the like is used.

As the cotton substance for a mouth, cut cotton of 4 cm x 4 cm generally used may be used, and a given amount of jelly substance is applied to the cut cotton.

For applying the jelly substance, the cut cotton is divided in the middle along the height direction, the jelly substance is applied on one divided face, and the divided cotton is restored as before. The divided faces are connected through the jelly substance, and the original appearance of the cut cotton can be restored.

As the cotton substance for a mouth, when 0.5 g through 2.0 g of the jelly substance is included in the cotton substance of 4 x 4 cm, the body fluid in the mouth can be absorbed and prevented from leaking out, and the cotton substance can swell into a size suitably for keeping the puff shape of a cheek through moisture absorption.

As described so far, according to the present invention, in principal portions of a corpse where body fluids leak such as a throat, a rectum and a mouth, the body fluids are absorbed and prevented from leaking, and therefore, the body fluid leakage preventing treatment for the principal portions of a corpse can be realized merely by preparing one set of the body fluid leakage preventing device.

Furthermore, when the amount of jelly substance filled in the syringe is 20 through 30 cc and the amount of the rectum body fluid sealing member is 0.7 through 1.3 times as large as that of jelly substance, the body fluid leakage preventing device can be commonly used for any of general corpses, and there is no need to prepare a plurality of throat syringes and rectum sealing devices in various sizes.

### Brief Description of Drawings

FIG. **1** is a diagram of a corpse body fluid leakage preventing device according to Embodiment 1 of the invention.
FIG. **2** is a partial cross-sectional view of a syringe of Embodiment 1.
FIG. **3** is a partial enlarged view of a rectum body fluid sealing member of Embodiment 1.
FIG. **4** is a partial explanatory diagram of the rectum body fluid sealing member of FIG. **3.**
FIG. **5** is a perspective view of divided cotton substance for a mouth.
FIG. **6** is a cross-sectional view for showing a state where a throat body fluid leakage preventing device is used on a corpse.
FIG. **7** is a diagram for explaining insertion of a rectum sealing member.
FIG. **8** is a cross-sectional view of a device according to Embodiment 2 of the invention.
FIG. **9** is a cross-sectional view of a device according to Embodiment 3 of the invention.
FIG. **10** is a cross-sectional view of a device according to Embodiment 4 of the invention.
FIG. **11** is a cross-sectional view of a device according to Embodiment 5 of the invention.
FIG. **12** is a cross-sectional view of a device according to Embodiment 6 of the invention.
FIG. **13** is a front view of equipment additionally used in the invention.
FIG. **14** is a front view of another equipment additionally used in the invention.
FIG. **15** is a perspective view of still another equipment additionally used in the invention.
FIG. **16** is a perspective view of an earplug or a nose plug additionally used in the invention.
FIG. **17** is a perspective view for showing another structure of a syringe of the invention.
FIG. **18** is a perspective view of a female vagina body fluid sealing member.

### Best Mode for Carrying Out the Invention

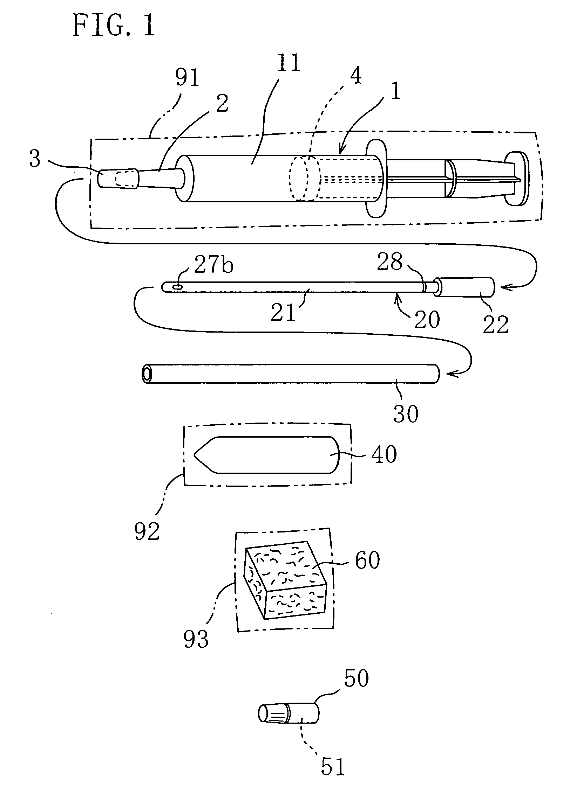

Now, preferred embodiments of the invention will be described with reference to the accompanying drawings. FIGS. **1** through **5** show a corpse body fluid leakage preventing device according to Embodiment 1 of the invention.

As shown in FIG. **1,** a jelly substance **11** is filled within a syringe **1.** A cap **3** is removably fit with pressure on a nozzle **2** at the tip. The jelly substance **11** will be described in detail below.

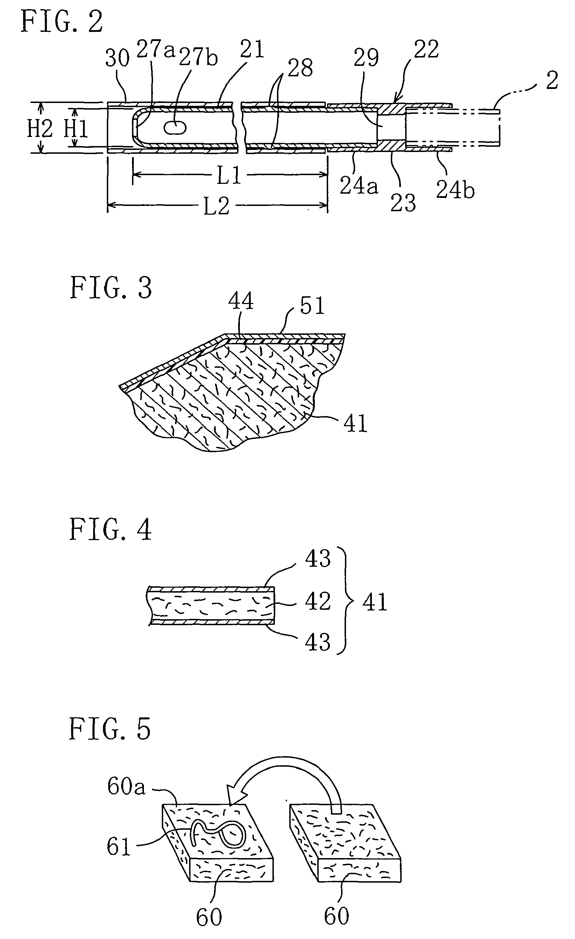

An inserting tube **21** to be inserted into a throat **B** is prepared. The inserting tube **21** has, as shown in FIG. **2,** an inserting tube body **21** made of a polymer with flexibility (plasticity) capable of bending along the shape of a nasal cavity when inserted into a nasal cavity A, and also has a connecting portion **22** on the rear end. This connecting portion is in a tubular shape made of a similar polymer more rigid than the inserting tube body **21** and has a step portion **23** in its inner middle part, and the rear end of the inserting tube body **21** is inserted into and connected to one tubular portion **24a.** This connection is attained by using an adhesive or by welding, so that the inserting tube body **21** and the connecting portion **22** can be definitely integrated. The nozzle **2** of the syringe **1** from which the cap **3** has been taken out is inserted into another tubular portion **24b,** and the tip of the nozzle **2** is abutted on the step portion **23.** Thus, the nozzle **2** is communicated with a hollow portion of the inserting tube body **21** through a through-hole **29.** The tip of the inserting tube body **21** is tapered so as to be easily inserted into the nasal cavity **A,** has a first opening **27a** on its tip face and has a second opening **27b** on a side face in the vicinity of the tip.

A mark **28** in the shape of a ring is provided on an outer circumferential face **26** of the inserting tube body **21.** This mark **28** is provided in a position where the first opening **27a** reaches the throat **B** when the inserting tube body **21** is inserted into the nasal cavity **A** toward the throat **B.**

A covering member **30** is externally fit on the inserting tube body **21** of the inserting tube **20.** This covering member **30** is provided so as to prevent the flexible inserting tube body **21** from deforming, for example, bending or breaking during long storage or transportation. Therefore, the covering member **30** is made of a polymer with higher rigidity than the inserting tube body **21.** Also, the covering member **30** has an inner diameter **H2** larger than the outer diameter **H1** of the inserting tube body **21,** so that it can be easily externally fit or removed. The covering member **30** has a length **L2** larger than the length **L1** of the inserting tube body **21,** and when the covering member **30** is externally fit on the inserting tube body **21,** the tip of the inserting tube body **21** can be preventing from protruding from the tip of the covering member **30.**

In Embodiment 1, the covering member **30** is loosely externally fit on the inserting tube body **21.** When the inserting tube body **21** is packaged in a box or the like, the inserting tube body **21** is held so as not to be slipped off from the covering member **30,** and thus, the inserting tube body can be preventing from deforming by employing a simple structure.

In Embodiment 1, the cap **3** is fit with a pressure on the nozzle **2,** and therefore, there is substantially no fear of the jelly substance **11** filled within the syringe **1** leaking out during long storage. Accordingly, the syringe **1** filled with the jelly substance **11** is not wrapped with anything. However, in order to definitely prevent the jelly substance **11** from absorbing moisture even during longer storage, the syringe may be contained in a sealed bag **91** of plastic or the like.

A rectum body fluid sealing member **40** is in a cylindrical shape with a conical tip as shown in FIG. **1** so as to be easily inserted into an anal. FIG. **3** is a partial enlarged view of the rectum body fluid sealing member **40.** The rectum body fluid sealing member **40** includes a highly water-absorbing fiber molded body **41** in the shape of a cylinder and a water-soluble sheet **44** covering it, and in use, a lubricant **51** is further coated thereon. As the highly water-absorbing fiber molded body **41,** as shown in FIG. **4,** water-absorbent fiber (brand name: Lanseal F; manufactured by Toyobo Co., Ltd.) having a double-layer structure composed of an inner layer **42** corresponding to a core of acrylic fiber and an outer layer **43** surrounding the inner layer **42,** having a high water-absorbing property and processed to swell after absorbing water is used. The molded body **41** has a diameter of 22 mm and a length of 80 mm, and its tip is tapered.

In order to prevent the water-soluble sheet **44** from breaking or absorbing moisture, the rectum body fluid sealing member **40** may be contained in a sealed bag **92** (of, for example, plastic, wrapping foil or the like), and the sealed bag **92** is opened before use.

As a water-soluble sealing material, a water-soluble sheet may be coated or a water-soluble sealing agent may be applied or sprayed. In this embodiment, however, the water-soluble sheet **44** is used because it can easily and uniformly cover the molded body. In particular, the water-soluble sheet **44** preferably prevents a lubricant from permeating into the fiber molded body even when it is thin and rapidly dissolves in a body fluid. As the water-soluble sheet **44,** a sheet manufactured by Mitsubishi Paper Mills Limited as a product number 60MDP is used. This sheet **44** is wrapped around the molded body **41.** With the sealing member prepared in this manner, a lubricant **51** separately prepared in a vessel **50** is applied to the outer face of the water-soluble sheet in use, so that it can be easily inserted into an anal. As the lubricant, glycerin **51** contained in the vessel **50** is used. This glycerin is applied preferably immediately before use in order that permeation of the glycerin **51** through the water-soluble sheet **44** into the molded body **41** can be possibly avoided.

With respect to the size of the rectum body fluid sealing member **40,** as its diameter is smaller, it can be more easily inserted into a body cavity of an anal (rectum), but it disadvantageously takes longer time to swell after the insertion to expand to be tightly adhered to the rectum paries. On the other hand, when it is too large, it is difficult to insert into an anal. Accordingly, the diameter is preferably 10 through 25 mm. Also, as the length is smaller, it is more easily inserted, but when the length is too small, its volume attained by swelling is insufficient and hence the sealing function is degraded. Therefore, the length is preferably 20 through 10 mm and more preferably 40 through 80 mm.

Preferably, the cylindrical molded body **41** swells by approximately 2.5 times or larger and preferably 4 times or larger in the diameter and minimally swells along the axial direction, so as to rapidly seal a rectum. In particular, the cylindrical molded body **41** made of a porous fiber body with the two-layered structure composed of the inner layer **42** corresponding to a core material of acrylic fiber and the highly water-absorbing outer layer **43** surrounding the inner layer **42** is suitably used as the porous cylindrical molded body because the physical properties of the fiber are kept by the core material and the outer layer absorbs a body fluid to rapidly swell along the radial direction by approximately 2.5 times or larger.

The water-soluble sheet **44** is preferably as thin as possible as far as it can prevent the lubricant **51** from permeating into the fiber molded body **41** and it can cover the surface of the fiber molded body **41,** and for practical use, the thickness is preferably 200 µm or less.

The tip of the cylindrical molded body **41** is tapered so that the rectum body fluid sealing member **40** can be easily inserted into an anal, and the tapered shape is not limited to that employed in the embodiment. For example, merely one side may be inclined. Alternatively, it need not be in a conic shape but a plurality of inclined faces, for example, two faces, three faces or four faces, may be formed at interval along the circumferential direction or it may be in a pyramid shape. Further alternatively, the tip may have an elliptic cross-section. In the case where the inclined faces are formed, a small flat face may remain at the tip. Alternatively, a thin rod portion may remain at the tip where the inclined faces are formed. The inclined angles of the inclined faces may be single or multiple.

FIG. 5 shows a divided state of a cotton substance **60** for a mouth. In this embodiment, a commercially available cotton substance of 4 x 4 cm is used. Approximately 1 g of a jelly substance **61** squeezed out of a syringe or the like is adhered in the shape of a string onto a divided face **60a** of the cotton substance. In this state, another divided cotton substance **60** is attached as before, so that the jelly substance **61** can be adhered to the both divided cotton substances **60** as if they were one pack as before. Such a pack is prepared in the number of two to be filled in both cheeks. The two packs may be separately prepared or overlaid on each other as shown in FIG. **1.** The thickness of the cotton substance **60** of one pack is 10 mm in a natural state. The size of 4 cm x 4 cm and the thickness of the 10 mm are not particularly specified, but the size and the thickness may be larger or smaller as far as the cotton substance can be filled in a cheek, can prevent leakage of a body fluid and can fill out the cheek in a manner close to a natural cheek.

The method for adhering the jelly substance **11** onto the cotton substance **60** is not limited to the method described in this embodiment, but a' given amount of jelly may be injected into the cotton substance **60** with the nozzle of a syringe inserted into the cotton substance **60.** Although it is possible to apply the jelly substance on a surface of the cotton substance, the jelly substance **11** is preferably contained within the cotton substance **60** because when the jelly substance is exposed, it may possibly adsorb moisture and be difficult to manually handle.

It is noted that the cotton substance is preferably contained in, for example, a sealed bag such as a plastic flexible bag for preventing moisture absorption and contamination.

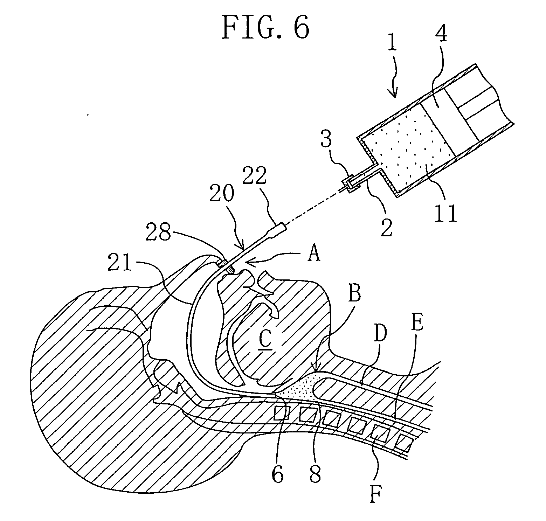

FIG. 6 shows a state where the throat body fluid leakage preventing device is used on a corpse. In this drawing, **A** denotes a nasal cavity, **B** denotes a throat, **C** denotes a tongue, **D** denotes an airway, **E** denotes an esophagus and **F** denotes a cervical vertebra. In use, the syringe **1** is taken out of a package (not shown), and the cap **3** of the nozzle 2 of the syringe **1** is taken out. The nozzle **2** is inserted into the tubular portion **24** of the connecting portion **22** of the inserting tube **20,** so as to push the tip of the nozzle **2** against the step portion **23.** The inserting tube body **21** of the inserting tube **20** is inserted from the nasal cavity **A** toward the throat **B,** and the insertion is stopped when the first opening portion **27a** reaches the throat **B.** In this state, a piston **4** of the syringe **1** is pressed, so as to push the jelly substance **11** out through the nozzle **2** into the inserting tube **20.** The jelly substance **11** thus contained in the inserting tube **20** is pushed out from the first opening portion **27a** and/or **27b** into the throat **B.** Since the openings **27a** and **27b** of the inserting tube **20** are formed not only at the tip along the inserting direction but also on the side face, even when a part of the opening is choked, the jelly substance is introduced into the throat **B.** The jelly substance **11** thus pushed into the throat **B** absorbs a body fluid and swells in this position, so as to seal the throat **B.**

After injecting most of the jelly substance **11** contained in the syringe 1, the syringe 1 and the inserting tube **20** are taken out of the nasal cavity **A.**

In this embodiment, the jelly substance **11** is made to flow collectively into the throat **B** from a plurality of openings. In particular, the substance in a jelly state is thus made to flow, the flowability is very high and the jelly substance can be smoothly filled with a small force. It does not scatter and go out from the nasal cavity **A** like a powder, and this jelly substance **11** stays in the throat **B** so as to seal the throat **B.**

Also, a sound caused in filling the jelly substance is comparatively small, and hence, an operator can perform this treatment without being nervous about people around.

In Embodiment 1, the covering member **30** is merely loosely fit on the inserting tube body **21.** Therefore, it is convenient for easily taking it out as far as attention is paid when they are contained in a package such as a box.

In order to reduce insertion resistance, the lubricant **51** may be applied on the inserting tube **20.**

Although the inserting tube is inserted into the nasal cavity **A** after connecting the inserting tube **20** with the syringe **1** in the aforementioned embodiment, the inserting tube 20 may be connected to the syringe **1** after or during the insertion of the inserting tube **20** into the nasal cavity **A.** The syringe and the inserting tube may be wrapped together with a film pack.

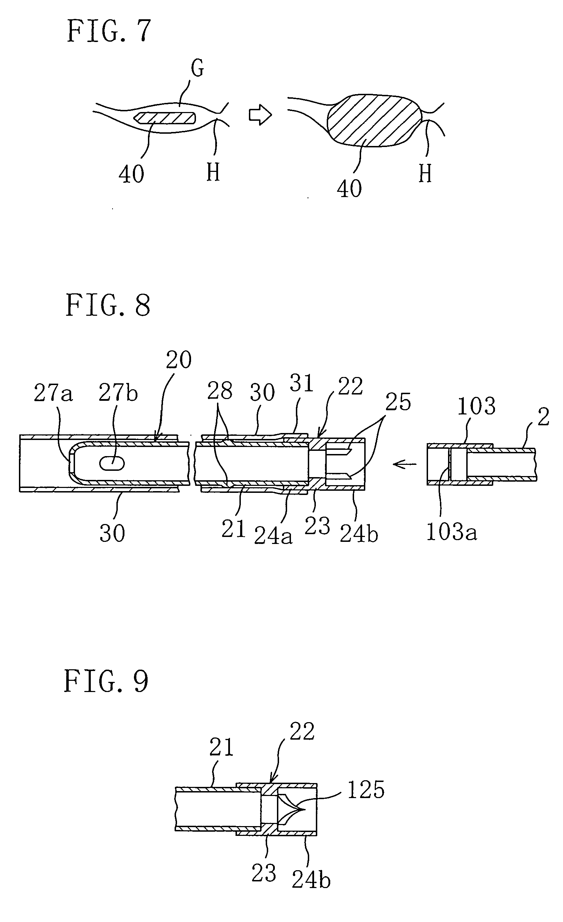

FIG. 7 is a diagram for explaining a state where the rectum sealing member **40** is inserted into a rectum from an anal. The lubricant **51** is applied to the rectum sealing member **40,** and it is inserted into the anal from its tapered tip. After the insertion, the water-soluble sheet **44** is immediately dissolved in a body fluid present in the rectum, and the body fluid is absorbed by the fiber molded body **41.** The highly water-absorbing outer layer **43** of the fiber molded body **41** rapidly swells, so that the outer face of the fiber molded body can reach the paries of the rectum. Thus, the rectum is sealed and the leakage of the body fluid is prevented.

FIG. **8** shows Embodiment 2 of the invention, wherein like reference numerals are used to refer to like elements used in Embodiment 1, and a difference alone is herein described. In Embodiment 2, a cap **103** for covering the nozzle **2** of the syringe is formed in a tubular shape, a thin seal **103a** is integrally provided within the cap, and a cut portion **25** is provided in the connecting portion **22** of the inserting tube **20.** Specifically, the cut portion **25** is formed in the step portion **23** to be in parallel to the tubular portion **24b** so as to have an arch-shaped cross-section and a shape sharpened toward the end. This cut portion **25** breaks through the seal **103a** when the nozzle **2** of the syringe is inserted into the tubular portion **24b.**

In Embodiment 2, there is no need to take out the cap **103** from the nozzle 2 but the seal is naturally broken by connecting the nozzle 2 to the connecting portion **22** so as to communicate the nozzle 2 with the through-hole **29,** and hence, Embodiment 2 is good at workability.

Also, an engaging portion **31** is provided on the covering member **30.** The tip portion of the covering member **30** is forcedly enlarged along the radial direction to be fit on the outer circumference of the connecting portion **22** for engagement. In order to easily enlarge the engaging portion **31** along the radial direction, one or more notches (not shown) may be provided on the tip of the covering member **30.**

The structure of the engaging portion **31** is not limited to this but, for example, one or more projections may be provided on the inner circumference of the covering member **30,** so that the projections can come into close contact with the outer circumference of the inserting tube body **21.** Also, the mark **28** may be provided in a thickness slightly extruded outside, and the covering member **30** covers the outer circumference of the inserting tube body **21** by allowing the projections to go beyond the mark **28,** and thus, the covering member **30** can be prevented from easily slipping off. In use, the covering member **30** is taken out of the inserting tube body **21** by allowing the projections to go beyond the mark **28** in the reverse direction.

FIG. 9 shows Embodiment 3 of the invention, and merely a difference from Embodiment 2 is herein described. In Embodiment 3, a cut portion **125** is formed to extend from the periphery of the step portion **23** toward the center of the through-hole **29** so as to have a shape sharpened toward the end. This cut portion 125 breaks through the center of the seal **103a** when the nozzle 2 of the syringe is inserted into the tubular portion **24b.**

In Embodiment 3, there is no need to take out the cap **103** from the nozzle 2 but the seal is naturally broken by connecting the nozzle 2 to the connecting portion **22** so as to communicate the nozzle 2 with the through-hole **29** as in Embodiment 2, and hence, Embodiment 3 is good at workability. Furthermore, since the center of the **seal 103a** is broken, the jelly substance **11** contained in the nozzle 2 can be smoothly introduced into the inserting tube body **21** through the through-hole **29.**

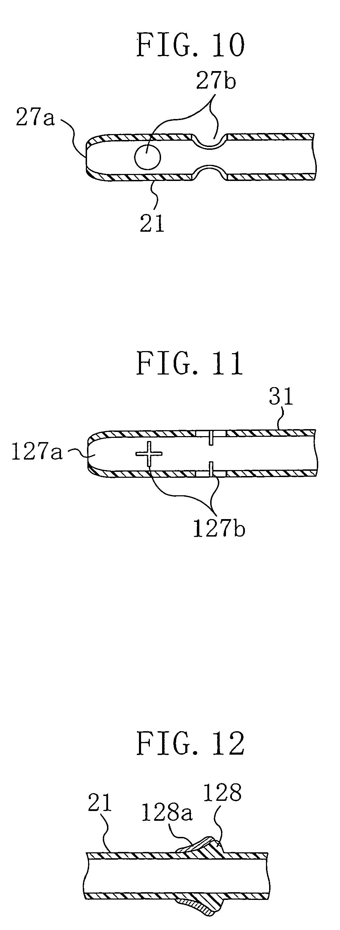

FIGS. **10** through **13** show Embodiments 4 through 6 of the invention, in which modifications of the inserting tube body are shown.

In Embodiment **4** shown in FIG. **10,** the second opening **27b** is formed as two opposing circular holes provided in two rows.

Preferably in this inserting tube body **21,** the outer diameter is 4 mm through 8 mm, and the inner diameter is smaller than the outer diameter by 0.5 mm through 2.5 mm, the second opening **27b** has a diameter of 2 mm through 6 mm, the center of the second opening in the first row is away from the tip portion by 6 mm through 10 mm, and the distance between the second opening in the second row and the second opening in the first row is 4 mm through 10 mm. Thus, the inserting tube body **21** can be smoothly inserted into the nasal cavity **A** and the tip reaches the throat **B,** and therefore, the jelly substance **11** contained in the inserting tube body **21** is supplied to the throat B, and in addition, the second openings **27b** can be simply formed, which reduces the fabrication cost and improves the productivity.

In Embodiment 5 shown in FIG. **11,** the first opening **127a** is formed as a circular hole and the second opening **127b** is formed as opposing two cross-shaped cut holes provided in two rows.

In Embodiment 5, when the first opening **127a** is opened and the fluid smoothly flows from the first opening **27a** into a body cavity of a corpse, the second openings **127b** are minimally opened, and hence, the jelly substance **11** does not flow from the second openings **127b.** On the other hand, when the first opening **127a** is closed or has a very small opening area, the inner pressure of the tip portion of the inserting tube body **21** is increased, and hence the cut holes of the second openings **127b** are opened, so as to supply the jelly substance **11** from the second openings **127b** into the nasal cavity **A.** This jelly substance **11** passes a gap between the paries of the nasal cavity **A** and the inserting tube body **21** to be supplied to the throat **B.** In this embodiment, probability that the jelly substance **11** leaks out of the corpse from the nasal cavity **A** is lowered by changing the shape of the second opening **127b.**

It is noted that the structure of the second opening is not limited to those shown in the embodiments of FIGS. **10** and **11** but the opening shape can be any of various shapes including a circle, an eclipse, a slit, a bow and a polygon. Also in the case where the second opening is formed as a cut hole as in FIG. **11,** the shape is not limited to the cross-shape but may be a horizontal or vertical linear shape or a curve. The number of the second openings is not limited to two spaced from each other by 180° along the circumferential direction but may be three spaced from one another by 120°, four spaced from one another by 90° or the like. The second openings may be formed as a combination of an opening and a cut hole or a combination of various openings having various shapes in various numbers. The number of rows of the second openings is not limited to two but can be three. However, when the number of rows is too large, the flexibility of the tip portion of the inserting tube is increased, and the inserting tube is difficult to insert, and therefore, the number of rows is preferably not too large.

In Embodiment 6 shown in FIG. **12,** a stopper **128** is provided in stead of the mark **28** of Embodiment 1. Specifically, the stopper **128** is provided in such a position that when the stopper **128** comes into contact with the nasal cavity A, the first opening **27a** at the tip of the inserting tube body **21** reaches the throat **B.**

Since the stopper **128** is provided with an elastic seal **128a** to be touched by the tip of the nose, the elastic seal **128a** is fit in the nasal cavity A, so that the leakage of the fluid can be effectively prevented.

Also, when a projecting portion of the stopper **128** slightly extrudes from the inner diameter of the covering member **30,** the projecting portion of the stopper **128** can work as an engaging portion **31** for preventing the covering member 30 from simply slipping off when it is externally fit on the inserting tube body **21.**

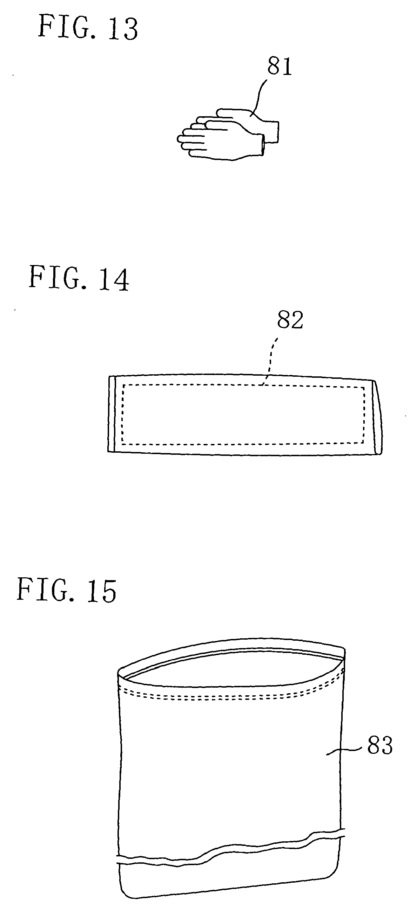

FIGS. **13** through **16** show equipment additionally used in this invention. FIG. **13** shows rubber gloves **81,** which are used as gloves in handling the rectum body fluid sealing member **40** or the like.

FIG. **14** shows wet tissue **82** for wiping hands, which includes chlorine dioxide as a disinfectant. This is used by an operator in or after treating a corpse for simply wiping his/her hands. The wet tissue **82** for wiping hands are contained in a plastic sealed bag.

FIG. **15** shows a container bag **83** for containing the sealed bag **91,** sealed plastic bags **92, 93** and **94,** the syringe **1,** the cap **3,** the inserting tube **20,** the covering member **30,** the vessel **50** and the like after treating a corpse. Thus, these elements are prevented from being scattered.

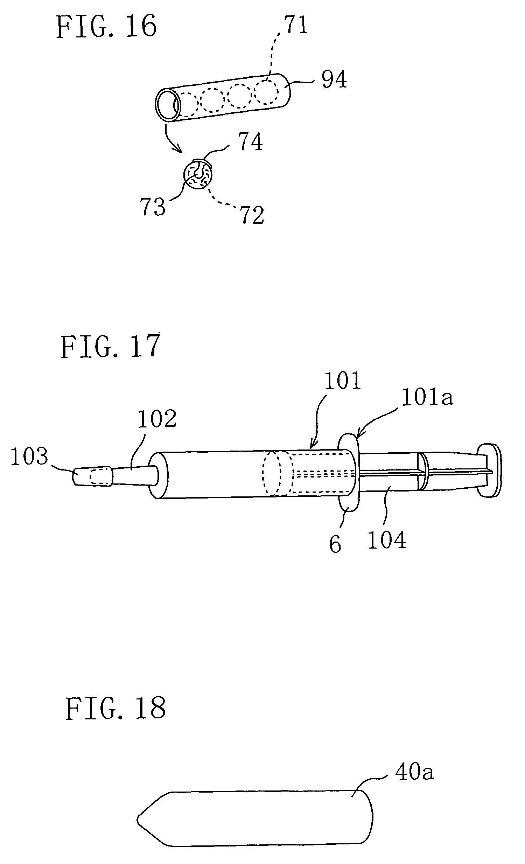

FIG. **16** shows a sealing member **71** for use as an earplug or a nose plug. Four sealing members **71** are provided in total, two as the earplugs and two as the nose plugs. Each sealing member **71** is made of a spherical cotton material **72,** which contains, in its center, a jelly substance **73** including a highly water-absorbing polymer, namely, a jelly substance identical to the jelly substance **11** contained in the syringe **1.** A reference numeral **74** denotes a capping member.

The sealing members **71** are contained in a cylindrical plastic sealed bag **94.**

Merely a small amount of body fluid leaks from an ear and a very small amount of body fluid leaks from a nose when the aforementioned body fluid leakage preventing treatment is performed, and therefore, a sealing member simply made of a cotton material **73** may be used as a simple type of sealing member.

Also, although the sealing members **71** are contained in the cylindrical plastic sealed bag **94,** they can be contained in the plastic sealed bag **93** together with the cotton substance **60** for a mouth.

FIG. **17** shows another structure of the syringe, in which a flange **101a** of the syringe **101** is colored as an identification mark **6** so as to clearly show that the syringe is for use for a corpse. The position of the identification mark **6** is not limited to the flange **101a** but a part and/or all of the syringe **101,** a nozzle **102** and a piston **104** may be colored. Also, a trifle mark **6** may be provided on the outer circumference of the syringe **101** for showing the amount to be used for an infant/child. Alternatively, as a simple method, a cap **103** may be colored for identification.

FIG. **18** shows a female vagina body fluid sealing member **40a.** This body fluid ' sealing member **40a** is the same as the rectum body fluid sealing member **40** and hence the description is omitted.

In this embodiment, the female vagina body fluid sealing member **40a** and the rectum body fluid sealing member **40** have the same size (in diameter and length) and the same shape, and therefore, there is no need to prepare different members for respective uses, which reduces the cost. In addition, when the sealing members different in the shape or the size are prepared, there is a fear of misuse, which can be avoided because the members are the same in this embodiment.

The aforementioned embodiments, the alternative structure of the syringe and the additional equipment can be appropriately combined for use. Furthermore, if there is another additional equipment, such as a female urethra sealing member, a deodorant, face gauge for a corpse, a band for fixing a jaw of a corpse, a band for joining hands of a corpse and the like may be added.

Furthermore, when the sealing members for use as the earplugs and the nose plugs are provided, almost all body cavities of a corpse can be sealed, and hence, the leakage of body fluids from the corpse can be substantially completely prevented.

## Claims

1. A corpse body fluid leakage preventing device comprising:
a syringe filled with a jelly substance including a highly water-absorbing polymer to be inserted into a throat of a corpse;
an inserting tube including a flexible inserting tube body made of a synthetic resin to be inserted into the throat from a nostril, a connecting portion provided at a rear end of said inserting tube body and capable of connecting to said syringe, and an opening provided at a tip of said inserting tube body;
a covering member externally fit on said inserting tube;
a body fluid sealing member for a rectum including a cylindrical molded body made from highly water-absorbing porous fiber and a water-soluble sheet covering an outer face of said cylindrical molded body; and
a cotton substance for a mouth to which a jelly substance including a highly water-absorbing polymer is applied.

2. The corpse body fluid leakage preventing device of Claim 1,
wherein said body fluid sealing member for a rectum is included in a ratio of 40 through 180 parts by volume on the basis of 100 parts by volume of said jelly substance filled in said syringe.

3. The corpse body fluid leakage preventing device of Claim 2,
wherein an amount of said jelly substance filled in said syringe is 20 through 30 cc, and
an amount of said body fluid sealing member for a rectum is 0.7 through 1.3 times as large as the amount of said jelly substance.

4. The corpse body fluid leakage preventing device of any of Claims 1 through 3,
wherein said jelly substance filled in said syringe includes a solvent, a puffing agent and a highly water-absorbing polymer powder,
said highly water-absorbing polymer powder is dispersed in a ratio of 5000 or more particles per 1 mL of said jelly substance,
said puffing agent is included in a ratio of 0.02 through 0.15 parts by weight on the basis of 100 parts by weight of said solvent, and
said jelly substance has viscosity of 8000 through 40000 cP.

5. The corpse body fluid leakage preventing device of Claim 4,
wherein said jelly substance further includes a neutralizer and a lubricant.

6. The corpse body fluid leakage preventing device of any of Claims 1 through 5,
wherein a nozzle of said syringe is covered with a removable cap, and
said connecting portion of said inserting tube has a tubular portion to be fit in said nozzle from which said cap has been removed, and a step portion abutted a tip of said nozzle.

7. The corpse body fluid leakage preventing device of any of Claims 1 through 5,
wherein a nozzle of said syringe is covered with a breakable cap, and
said connecting portion of said inserting tube has a tubular portion to be fit in said nozzle from which said cap has been removed by breaking and a step portion abutted a tip of said nozzle.

8. The corpse body fluid leakage preventing device of any of Claims 1 through 5,
wherein a nozzle of said syringe is covered with a cap, and
a connecting portion of said inserting tube is provided with a cut portion for cutting said cap, when said nozzle covered with said cap is connected, for allowing said jelly substance filled in said syringe to be introduced through said connecting portion into said inserting tube body.

9. The corpse body fluid leakage preventing device of any of Claims 1 through 8,
wherein said covering member has such a length that a tip of said covering member is extruded beyond said opening provided at the tip of said inserting tube when said covering member is externally fit on said inserting tube body of said inserting tube.

10. The corpse body fluid leakage preventing device of any of Claims 1 through 9,
wherein said covering member has an inner diameter larger than an outer diameter of said inserting tube body and has an engaging portion to be engaged with an outer circumference of said inserting tube.

11. The corpse body fluid leakage preventing device of Claim 10,
wherein said engaging portion of said covering member is engaged by being fit on an outer circumference of said connecting portion of said inserting tube.

12. The corpse body fluid leakage preventing device of any of Claims 1 through 11,
wherein said jelly substance filled in said syringe includes at least one of a deodorant and a disinfectant.

13. The corpse body fluid leakage preventing device of any of Claims 1 through 12,
wherein said cylindrical molded body of said body fluid sealing member for a rectum includes at least one of a deodorant and a disinfectant.

14. The corpse body fluid leakage preventing device of any of Claims 1 through 13,
wherein a trifle mark to be used for injecting a small amount of jelly substance is provided on an outer circumference of said syringe.

15. The corpse body fluid leakage preventing device of any of Claims 1 through 14,
wherein said syringe is contained in a sealed bag.

16. The corpse body fluid leakage preventing device of any of Claims 1 through 15,
wherein said syringe has a piston for pushing out said jelly substance filled therein, and
a colored identification mark for identifying a type of syringe is provided at least one of said syringe and said piston.

17. The corpse body fluid leakage preventing device of any of Claims 1 through 16, further comprising working gloves.

18. The corpse body fluid leakage preventing device of any of Claims 1 through 17, further comprising paper sheets for wiping hands.

19. The corpse body fluid leakage preventing device of Claim 18,
wherein a disinfectant is permeated into said paper sheets for wiping hands.

20. The corpse body fluid leakage preventing device of any of Claims 1 through 19, further comprising a sealing member for use as an earplug or a nose plug.

21. The corpse body fluid leakage preventing device of Claim 20,
wherein said sealing member is made of a cotton material.

22. The corpse body fluid leakage preventing device of Claim 21,
wherein said sealing member includes, in said cotton material, 0 through 1.5 mg of jelly substance including a highly water-absorbing polymer.

23. The corpse body fluid leakage preventing device of any of Claims 20 through 22,
wherein said sealing member is contained in a plastic sealed bag.

24. The corpse body fluid leakage preventing device of any of Claims 1 through 23, further comprising a vessel containing a lubricant.

25. The corpse body fluid leakage preventing device of any of Claims 1 through 24, further comprising a body fluid sealing member for a female vagina including a cylindrical molded body of highly water-absorbing porous fiber and a water-soluble sheet covering an outer circumference of said cylindrical molded body.

26. The corpse body fluid leakage preventing device of Claim 25, comprising two body fluid sealing members having an identical structure alternatively used for a rectum and a female vagina.

27. The corpse body fluid leakage preventing device of any of Claims 1 through 24, further comprising a container bag for containing said syringe, said inserting tube, said covering member and the like after use.

28. The corpse body fluid leakage preventing device of any of Claims 1 through 27,
wherein said cotton substance includes 0.5 g through 2.0 g of jelly substance per volume of 16 cm³.

29. The corpse body fluid leakage preventing device of Claim 28,
wherein said jelly substance included in said cotton substance is of the same type as said jelly substance filled in said syringe.

30. The corpse body fluid leakage preventing device of any of Claims 1 through 29,
wherein said cotton substance is contained in a plastic sealed bag.

31. The corpse body fluid leakage preventing device of any of Claims 1 through 30,
wherein said cotton substance and said sealing member are together contained in one plastic sealed bag.

32. The corpse body fluid leakage preventing device of any of Claims 1 through 31,
wherein a mark for confirming said tip reaching the throat is provided in a middle portion of said inserting tube body.

33. The corpse body fluid leakage preventing device of any of Claims 1 through 32,
wherein said highly water-absorbing polymer of said jelly substance filled in said syringe is a fine powder dispersed in a ratio of 17000 through 29000 particles in 1 mL of said jelly substance.

34. The corpse body fluid leakage preventing device of Claim 33,
wherein said highly water-absorbing powder is a powder of 20 through 150 mesh dispersed in a ratio of 18000 through 25000 particles in 1 mL of said jelly substance.

35. The corpse body fluid leakage preventing device of any of Claims 1 through 34,
wherein said jelly substance includes at least one of ethylene glycol, propylene glycol, diethylene glycol, methanol, ethanol and glycerin.

36. The corpse body fluid leakage preventing device of any of Claims 1 through 35,
wherein said jelly substance filled in said syringe includes 0.01 through 1.0 part by weight of an acrylic acid polymer and 0.03 through 0.7 part by weight of a neutralizer on the basis of 100 parts by weight of an alcohol-based principal component.

37. The corpse body fluid leakage preventing device of any of Claims 1 through 36,
wherein said jelly substance filled in said syringe has viscosity of 8000 through 40000 cP.

38. The corpse body fluid leakage preventing device of any of Claims 1 through 37,
wherein pH of said jelly substance filled in said syringe is 6 through 8.

39. The corpse body fluid leakage preventing device of any of Claims 1 through 38,
wherein said body fluid sealing member for a rectum includes a cylindrical molded body made from porous fiber with a two-layered structure including an inner layer corresponding to a core material made of acrylic fiber and a high water-absorbing outer layer, and a water-soluble sheet covering an outer circumference of said cylindrical molded body.

40. The corpse body fluid leakage preventing device of any of Claims 1 through 39,
wherein said body fluid sealing member for a rectum has a length of 20 through 90 mm and a diameter of 10 through 25 mm.

41. The corpse body fluid leakage preventing device of any of Claims 1 through 40,
wherein said water-soluble sheet of said body fluid sealing member for a rectum has a thickness of 200 µm or less and is rapidly dissolved when brought into contact with a body fluid.

42. The corpse body fluid leakage preventing device of any of Claims 39 through 41,
wherein when said cylindrical molded body comes into contact with a body fluid, said cylindrical molded body rapidly absorbs moisture and swells in diameter by approximately 2.5 times or larger.

43. The corpse body fluid leakage preventing device of any of Claims 39 through 42,
wherein said cylindrical molded body includes at least one of a deodorant and a disinfectant.

44. The corpse body fluid leakage preventing device of any of Claims 1 through 43,
wherein a first opening is formed on a tip face of said inserting tube body and a second opening is formed on a side face in the vicinity of the tip face of said inserting tube body.
